# EUROPEAN PATENT APPLICATION

(11) **EP 2 677 169 A1**
(43) Date of publication of application: **25.12.2013**
(21) Application number: 12813247.9
(22) Date of filing: 26.03.2012
(51) Int. Cl.: F03D 9/00, F03G 6/06

(54) **NATURAL ENERGY STORAGE AND POWER GENERATION METHOD AND POWER GENERATION SYSTEM THEREOF**

(30) Priority: 14.09.2011 CN 201110270983
(71) Applicant: Beijing Xiangtian Huachuang Aerodynamic Force Technology Research Institute Company Limited, Beijing (CN)
(72) Inventor: ZHOU, Dengrong, Sanhe Hebei 065201 (CN); ZHOU, Jian, Sanhe Hebei 065201 (CN)
(74) Representative: HOFFMANN EITLE
(86) International application number: PCT/CN2012/072994
(87) International publication number: WO 2013/037202

(57) **Abstract**

A storage energy generation method utilizing natural energy and generation system thereof are disclosed. It firstly generates electricity through natural energy such as wind power or solar energy and then compresses air, or directly compresses air, then generates electricity to electric grid through the compressed air which is deemed as power resource. The electric station utilizing integrated energy generates electricity to drive air compression device, further then produce compressed air as energy storage medium and store compressed air in air storage device, and then regard the compressed air as main or auxiliary driving energy to other electric station, such that function of stabilizing and adjusting peak load can be realized.

## Description

### Technical field

The present invention relates to a storage energy generation system, particularly relates to a storage energy generation method utilizing natural energy resource of wind and generation system thereof.

### Background

Wind energy generation system is highly paid attention worldwide and makes enormous progress recently because wind energy is inexhaustible. Common wind energy generator with blades driven by natural wind and generator driven by mechanical energy which is transformed from solar power all enter into industrial use phase. But all above mentioned forms which utilize wind energy and solar power have defects such as dependent on natural condition of wind energy and sunshine, complex structure and low efficiency of input-output. Aimed at above mentioned defects, Energy utilization means of combining wind energy with solar energy are disclosed.

At present, the most troublesome technical problem of generating electricity with instable natural energy such as solar energy and wind energy etc is that it can not obtain stable electric output. Particularly, the defect is more obvious when paralleled with public electric grid. Though expensive frequency match system is utilized in present wind power electric station, this technical problem can not still be solved well. This is one bottleneck that clean energy such as wind energy can not be fully development.

Chinese patent application CN201110259228.9 disclosed one storage separation generation method utilizing compressed air and generation device thereof. Steps of storage separation generation method utilizing compressed air include: wind wheel transforms kinetic energy of wind to mechanical energy; wind wheel drives air compressor to work and produce compressed air; compressed air is stored in air storage tank; compressed air drives air motor or steam turbine; the air motor or steam turbine drives generator to generate electricity; and then excess electrical energy is stored. Storage wind power generation device utilizing compressed air includes wind wheel, speed-increasing gearbox, air compressor, air storage tank, electric control valve, air motor or steam turbine and generator. Although this method and device can solve the stable output problem of electrical energy, but there is great limitation in productivity and scale, so it can be only applied to small power stations which have sufficient wind energy.

### Summary of the invention

The present invention aims at providing a new generation method utilizing natural energy, in which natural energy such as wind energy, solar energy, luminous energy, night solar energy, geothermal energy, cycling mechanical heat energy is transformed to compressed air energy first, then compressed air is deemed as source of power to drive electric grid to supply electricity, or driving energy for vehicles, such that technical problem of instable natural resource in prior art is solved through solution with lower cost and a bottleneck which hinders utilization of wind energy is overcame.

The present invention also provides a generation system utilizing natural energy which realizes above mentioned method, such as wind energy generation system.

To realize above mentioned object, the present invention firstly provides a generation method for storage power generation system utilizing natural energy, which utilizes integrated energy electric station to generate electricity and drive air compressed device, and further utilizes the air compressed device to produce compressed air as energy storage medium, then store compressed air in N groups of air storage device, and then compressed air is deemed as main driving energy or auxiliary driving energy of other electric stations, so as to achieve functions of stabilizing and adjusting peak load compensation.

Preferably, the said integrated energy electric station is a wind electric station, particularly preferred is an air duct well electric station utilizing integrated energy.

Preferably, the said integrated energy air duct well electric station produces electric energy through a wind power generator to drive an air compressor, compressed air is stored in air storage tanks; the said air storage tanks are connected to others more than one electric station, the electric station is supplied with compressed air as main driving power source or power source of adjusting peak load compensation.

Preferably, the said integrated energy electric station is a hydroelectric station.

Preferably, the said integrated energy electric station is a wave energy electric station.

Preferably, the said integrated energy electric station is a tidal energy electric station.

Preferably, pressure of the said compressed air is 120-180 atmospheric pressure.

The present invention also provides a storage energy generation system utilizing integrated energy, which includes a storage energy electric station utilizing natural energy, the said storage energy electric station utilizing natural energy is connected to an air compressed device to produce compressed air as energy storage medium, the air compressed device is connected to air storage device in which compressed air is stored, the said air storage device is further connected to other electric stations to supply energy for stably generating electricity and adjusting peak load compensation to electric station.

Preferably, the said storage energy electric station utilizing natural energy is a hydroelectric station.

Preferably, the said storage energy electric station utilizing natural energy is a wave energy electric station.

Preferably, the said storage energy electric station utilizing natural energy is a tidal energy electric station.

Preferably, the said storage energy electric station utilizing natural energy is an air duct well electric station utilizing natural energy.

Preferably, the said air duct well electric station utilizing natural energy includes wind power generator which is set in it, the wind power generator is connected to an air compressed device, the air compressed device is connected to air storage device which is used to store compressed air, and the air storage device is further connected to other electric stations.

Preferably, the said other electric station is an air duct well electric station utilizing integrated energy.

Preferably, the said air duct well electric station utilizing natural energy includes an air motor which is set in the air duct well, emission end of the air storage device is connected to input end of the air motor.

Preferably, the said air motor is connected to the wind power generator of the said air duct well electric station utilizing integrated energy through a mechanical or electric transmission.

Preferably, the said other electric station is an electric station utilizing pressure turbo-generator, the input end of the pressure turbo-generator is connected to the output end of the air storage device.

Preferably, the said other electric station is an electric station utilizing paddle typed wind power generator.

Preferably, the said paddle typed wind power generator is provided with an air turbine driving device which links with driving shaft, the input end of the air turbine driving device is connected to the output end of the air storage device.

Preferably, the said air storage device is a steel air storage tank which can resist pressure of 120-180 atmospheric pressure.

As a preferred embodiment, the present invention also provides an air duct well electric station utilizing integrated energy, which includes an air duct well which is perpendicular to the ground and on base of which some intake channels are set, a solar pre-heat room with a bottom surface of which is flush with the bottom surface of the air duct well and top surface of which is higher than the said intake channels surrounds the said base, one or more wind power generators with airflow driving device are set in the said air duct well, the said solar pre-heat room is provided with a heat collector and an optical collector which gathers sunlight to the heat collector; an adjusting peak load device, which includes an electric air compressor, a charging and discharging device and a power distribution control device which is connected to the said wind power generator, the air compressor is connected to a group of air storage tanks through pipeline; air inlets corresponding to the said intake channels are set around the said solar pre-heat room, the air inlets communicates with the said intake channels through a main wind channel; the air inlets are further provided with blowers which press and supply air to the solar pre-heat room.

Preferably, the top surface of the solar pre-heat room is a transparent glass shed top surface, and the said bottom surface is a reflector which can reflect optical line inside.

Preferably, the said solar pre-heat room includes a three-layer circular surrounding wall which is set concentricly and annularly, such that three groups of concentric and annular interval space are formed, each group of said interval space is separated to three layers by the said top surface, and a two-layer clapboard which is formed by optical collector positioned between top surface and bottom surface is divided by three layers; each annular channel is provided with thermal current channel which is communicated with the main wind channel.

Preferably, the said optical collector is a collector lens.

Preferably, the said heat collector is a cycling heat collecting tube which is communicated and filled with liquid heat collecting medium.

Preferably, a solar liquid heat collector is also provided out of the said solar pre-heat room, and it is connected to the said cycling heat collecting tube.

Preferably, the said cycling heat collecting tube is further connected to liquid cooling heat removal system of the air compressor.

Preferably, the said cycling heat collecting tube further is connected to the terrestrial heat pump of underground hot water heating system.

Preferably, more than one air motors used to drive the said wind power generator are set in the said air duct well, and connected to the said air storage tank, the said air motors are connected to the said wind power generator through mechanical or electric transmission.

Preferably, the said blower is connected to a pneumatic motor and an electro-motor; the pneumatic motor is connected to the said air storage tank; the electro-motor is connected to the charging and discharging device.

Preferably, the wind power generation device used in above mentioned air duct well electric station is such device, it is set in interior of the air duct well and includes a reducing duct device with a reducing portion; a generator is set in this duct device; an impeller which drives the generator to rotate is provided at the most minimum diameter of reducing portion in the said duct device, and the impeller is connected to rotor axes of the generator; the rotor axes passes through the generator, out end of the rotor axes is connected to a pressure turbine , and relative to the said impeller, the rotor axes locates in the intake direction of the said duct device.

Preferably, the inlet aperture and outlet aperture of the duct device are same, and its outer wall appears cylinder shaped.

Preferably, two sides of side wall's longitudinal section of the said duct device are symmetrical smooth gradually changing curves with convex portion inward, and the smooth gradually changing curve forms the said reducing portion.

Preferably, the said symmetrical smooth gradually changing curve is a symmetrical hyperbola.

Preferably, the cross-sectional area of the said wind power generation device is less than or equal to 50% that of the air duct well.

Preferably, the said duct device is coaxially set with the air duct well.

Preferably, composite structure of the said impeller generator and pressure turbine is overall received within outer contour line of the said duct device.

Preferably, the said impeller connects to the rotor axes of the generator through a transmission which is used to increase speed.

Preferably, the said pressure turbine is provided with transmission which is used to adjust rotational speed of the pressure turbine between rotor axeses.

Preferably, the said generator is a frequency conversion permanent-magnetic generator.

An air duct well electric station utilizes the integrated energy according to the present invention, which utilizes any one of above mentioned wind power generation devices,

Wind tower structure of the air duct well electric station utilizing integrated energy according to the present invention is preferred this kind of wind tower, several groups of air duct well support rings which surround outer wall of the air duct well are set from top to bottom, some air duct well connect points are uniformly distributed along circumference on each group of air duct well support ring; a wall of bearing structure is provided with several groups of bearing structure support ring at position of corresponding said air duct well support ring, as well bearing structure connect points are uniformly distributed along circumference on the said bearing structure support ring; the said air duct well connect point is connected to the said bearing structure connect point with equal height through a support bar, one end of the said support bar is connected to the said air duct well connect point and another end is connected to bearing structure connect point on the side wall of the bearing structure, each support bar is symmetrically distributedin the plane.

Preferably, eight air duct well support connect points are uniformly distributed along circumference on the said air duct well support ring separately; twelve bearing structure connecting points are uniformly distributed along circumference on the said bearing structure support ring separately; On two corresponding support rings with same height, four uniformly distributed air duct well connecting points and corresponding four bearing structure connect points form a cross shape through four straight support bars which distribute along radial direction, the said bearing structure connecting points are connected to air duct well connect points through oblique support bar and form a symmetrical structure with octagon shape.

Preferably, the said bearing structure is steel truss structure or steel concrete structure; the said air duct well is steel concrete structure.

Preferably, the said air duct well is splicing structure with pre-sectional steel concrete tube. Preferably, the said steel truss structure is wrapped with light composite board.

Preferably, the said light composite board is colorful steel-polyurethane foam composite board. Preferably, the said air duct well is composed by splicing pre-sectional steel concrete tube.

Preferably, all or one of the said air duct well support ring, the said bearing structure support ring, support bar are formed by flange beam.

The present invention provides an air duct well electric station utilizing integrated energy, wherein the wind tower utilizes any one of the above mentioned structure.

The muffler used in the air duct well electric station utilizing integrated energy according to the present invention is preferred such a muffler, wherein it is set on top of the air duct well of the electric station, the muffler covers air outlet of the air duct well and communicates with the said air duct well.

Preferably, the said muffler is provided with an end cap which is set on top of the wind tower, the muffler is provided with some dispersed exhaust holes.

Preferably, the said muffler includes several groups of interval and coaxial cylindrical hush pipes, several horizontal exhaust holes are set on the hush pipes; the said end caps cover the outermost of the said hush pipes with interval; the under opening of the hush pipe communicates with upper end of the air duct well.

Preferably, horizontal exhaust holes set on the said adjacent hush pipes are staggered with each other.

Preferably, the said hush pipe has cylindrical structure with more than three layers which are coaxially set with the air duct well separately.

Preferably, total area of exhaust holes on hush pipe of each layer is more than or equal to cross-sectional area of outlet of the air duct well.

Preferably, the said exhaust holes are circular holes.

Preferably, the said exhaust holes are groove joints.

According to the said muffler, the said muffler is provided with a hollow tapered end, several exhaust holes are set on taper surface of the tapered end.

Preferably, top end of the said hollow tapered end is provided with lightning protection device or warning and signal device.

The present invention provides an air duct well electric station utilizing integrated energy , wherein the top end of its wind tower is provided with muffler according to each one of above mentioned.

The present invention relates to storage energy generation system utilizing natural energy and generation method thereof, and air duct well electric station utilizing integrated energy which can be applied to this generation system, the operational principle and beneficial effects are as following:

The electric station utilizing integrated energy, particularly the intake channels at base of the air duct well electric station utilizing integrated energy locate in solar pre-heat room which surrounds the electric station, the sunlight heat the tube filled with heat collecting medium through optical collector composed by prism and convex. According to requirement of design temperature, the tube may multiply surround or intertwine in the solar pre-heat room so as to obtain enough temperature, at meantime, the tube can be further connected to solar heat collector which has higher heating efficiency, liquid cooling heat removal system of the air compressor, and underground hot water heating system etc to fully utilize heat energy of surrounding environment, such that the tube can obtain temperature much higher than directly shine the air. Under the condition that the tubes are arranged with certain density, the air surrounding the tubes can obtain much higher temperature than that only shined by sunlight. Heated air enters into intake channels at base of the air duct well, then produces higher air velocity and pressure in the air duct well. When change of natural conditions such as wind power, cloudy and sunny, sunlight etc causes fluctuation of airflow, for example, when natural conditions are fine which causes excess generated electric energy, the adjusting peak load device can store excess electric energy to storage battery through allocation of the power distribution control system or drive the air compressor to store compressed air in the air storage tank. On the contrary, when generated electric energy is not enough, the adjusting peak load device can release above mentioned stored electric energy and supply electricity to the blower to provide effective supplementary airflow, and the air storage tank can drive air motor in the air duct well to assist operation of the generator. Appropriate capacity of adjusting peak load can be chosen according to local natural conditions such that balanced generation in day and night and four seasons can be realized.

Smooth-going ascending airflow in the air duct well locates at duct device, and airflow closer to the wall of air duct well still flows upward according to original travel direction and velocity, and airflow of central part of the air duct well enters into the duct device. Under the condition of normal operation, the pressure turbine will compress the airflow which enters into the inlet of the duct and accelerate the airflow to upper impeller, the airflow is further compressed by reducing portion of the duct and form parallel flow in faster velocity and greater pressure, now the impeller is pushed to drive the generator to generate electricity. At meantime, partial power output by the impeller responses and applies to the pressure turbine, which drives the turbine to operate so as to compress and accelerate injected airflow. According to the principle of fluid mechanics, inner outline with symmetric hyperbolic section is the section form which makes liquid flow smoothly most, its "chimney" effect is the strongest, the section has comparatively large opening, and does its utmost to reduce velocity and pressure differences between injected or ejected airflows at inlet or outlet of the duct and surrounding airflow, turbulent flow is not easily produced, that is to say, perturbation to overall mobility of airflow is minimum, and main noise source is eliminated. So the longitudinal section of side wall of the duct is preferably designed to symmetric hyperbolic outline. According to rotational speed or frequency of the optional generator and design of the duct, reasonable rotational speeds of the impeller and pressure turbine are hardly coordinated. Appropriate transmission mechanism can be introduced to coordinate rotational speed, such that the impeller and pressure turbine all reach optimum operation efficiency.

The duct device is as far as possibly coaxially set at central portion of the air duct well, and its sectional area is not larger than 50% sectional area of the air duct well. Such configuration makes relatively small interference to surrounding airflow and benefit to restoration of velocity and pressure of working airflow, so as to ensure efficient operation of next level generation device.

Choosing frequency conversion permanent-magnetic generator which structure is simple can simplify maintenance work and easily apply to power input condition which is relatively instable.

Through above mentioned structure, the bearing structure supports the air duct well in the bearing structure and firmly forms to a whole part through symmetrically distributed support bars, the bearing structure utilizes steel truss structure which makes easily assemble, and symmetrically distributed support bars provide stable balanced support in each direction. Because the air duct well does not need to bear weight, it can be formed through splicing pre-sectional steel concrete cylinder tubes, which greatly increases construction efficiency and reduce construction difficulty, further ensure smooth standard of inner wall of the air duct well, it is benefit to construct high power air duct well electric station with high pressure and velocity.

The smooth going ascending airflow in the air duct well enters into muffler at outlet, and discharges through multiple exhaust holes which are dispersed in the muffler. The airflow no more acutely collide with atmosphere outside which makes exhaust more smoothly, do not produce exhaust noise any more and reduce direct crash to top structure of the wind tower.

Storage energy generation system utilizing integrated energy produces and stores compressed air through an air compressor device which is connected to an electric station particularly an air duct well electric station utilizing integrated energy, such that compressed air becomes storage energy medium and main driving power of other electric station utilizing integrated energy particularly electricity grid, auxiliarily drives power source and realizes function of stabilizing frequency and adjusting peak load. Its structure is simple and cost is far less than traditional electrical or mechanical control system with same function.

The said integrated energy in the present invention particularly refer to one of natural energy such as wind power, hydraulic power, solar energy, tidal energy, wave energy or combination thereof.

The air duct well electric station utilizing integrated energy of present invention and applicant's series patent technical solution of driving vehicles through compressed power engine form a clean energy recycling system.

Technical features of the present invention are further described in detail through embodiments combined with drawings.

### Description of Drawings

Fig.1 is the overall configuration schematic view of one preferred embodiment of the air duct well electric station utilizing integrated energy according to the present invention.
Fig.2 is a section's framed structure schematic view of one preferred embodiment of solar pre-heat room of the air duct well electric station utilizing integrated energy according to the present invention.
Fig.3 is an exploded schematic view of wind power generation device which is used in the air duct well electric station utilizing integrated energy.
Fig.4 is a three-dimensional schematic view of the impeller in fig.3.
Fig.5 is a three-dimensional schematic view of the pressure turbine in fig.3.
Fig.6 is a schematic view which shows connecting structure of one cross section of the wind tower in fig.1.
Fig.7 is an exploded schematic view of one preferred embodiment of muffler structure used in the air duct well electric station utilizing integrated energy.
Fig.8 is a principle block diagram of the storage energy generation system utilizing integrated energy according to the present invention.
Fig.9 is a schematic view of the embodiment of the storage energy generation system utilizing integrated energy shown in Fig.8

Description of drawing reference signs: air duct well electric station utilizing integrated energy 1, wind tower 10, bearing tower 11, air duct well 12, support ring of bearing structure 110, connect point of bearing structure 111, support ring of air duct well 120, connect point of air duct well 121, support bracket of wind power generation device 122, muffler 13, tapered end 131, exhaust hole 132, end cap 133, hush pipe 134, exhaust hole 135, solar pre-heat room 20, air inlet 21, thermal current channel 210, main wind channel 211, glass shed top 22, surrounding wall 220, upright column 221, reflector 23, collector lens 24, cycling heat collecting tube 25, solar liquid heat collector 26, terrestrial heat pump 27, adjusting peak load system 30, power distribution control device 31, air storage tank 32, charging and discharging device 33, control cable 34, electro-motor 35, air compressor 36, blower 37, pressure motor 38, air duct 39, wind power generation device 40, generator 401, impeller 402, pressure turbine 403, transmission 404, inner wall of duct device 405, outer wall of duct device 406, outlet of duct device 407, inlet of duct device 408, support bracket of the generator 409, reducing portion of duct device H, cable pipe 41, charging cable 42, air motor 43, straight support bar 50, oblique support bar 51, pressure turbo-generator 6, paddle typed wind power generator 7.

### Detailed Embodiments

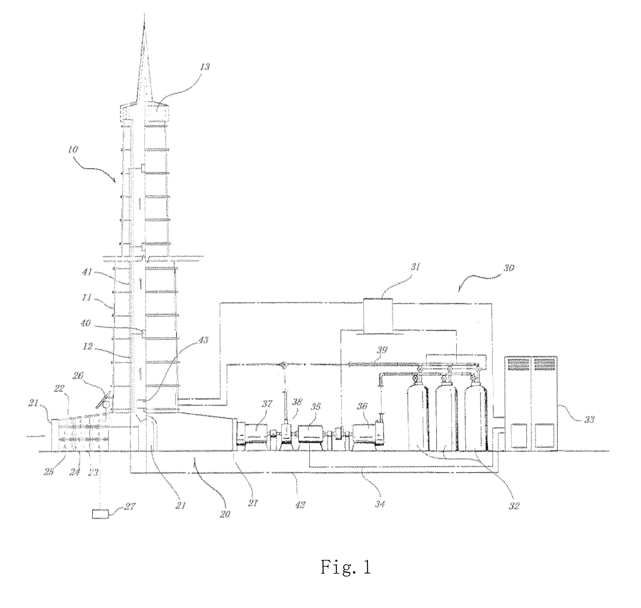

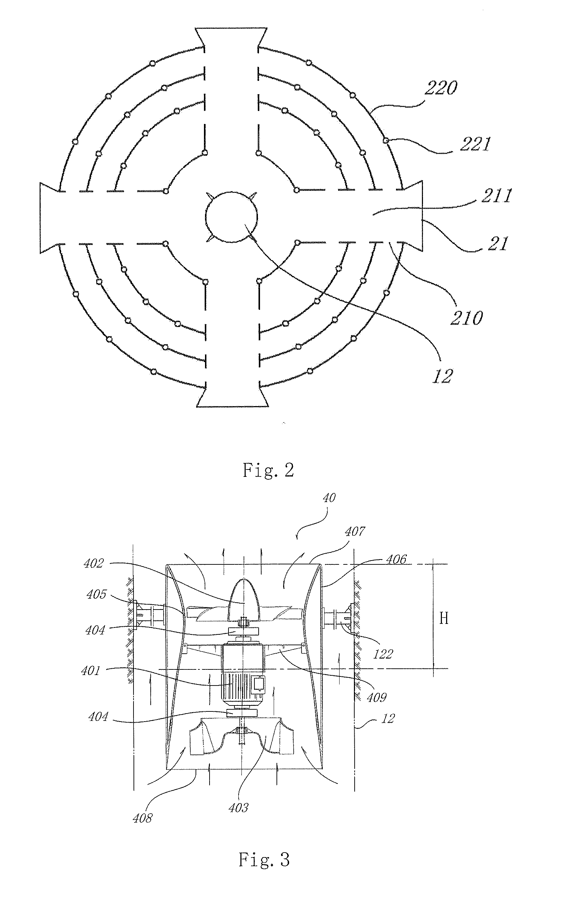

With reference to Fig.1, fig. 1 discloses an air duct well electric station utilizing integrated energy, which includes wind tower 10. The wind tower is perpendicular to the ground and includes a bearing tower bracket 11 with steel frame structure or steal concrete structure which surrounds and supports an air duct well 12. At base of the air duct well 12, four intake channels are set, the base is surrounded by a solar pre-heat room which can cover the said intake channels, and the solar pre-heat room is provided with air inlets corresponding to the said intake channels. One or more wind power generators 40 with airflow driving device are set in the said air duct well 12, and electric power is output through cable which is set in cable pipe 41 out of the air duct well 12. The solar pre-heat room 20 is provided with a transparent glass shed top 22 and surrounds the base of air duct well 12, its glass shed top is higher than intake channels of the air duct well 12. Corresponding to the intake channels, four air inlets 21 which are around the solar pre-heat room 20, each air inlet communicates with above mentioned intake channels through a main wind channel 211. With reference to Fig.2, the sectional frame structure of the solar pre-heat room 20 includes surrounding wall 220 which is arranged concentricly and annularly, and the frame structure is supported by upright column which is vertical to the ground, the surrounding wall 220 and partition boards which are arranged separately up and down form several annular airflow channels. The present embodiment is provided with three layers concentric annular surrounding wall 220. Besides top and bottom surface, two layers partition boards are furthermore arranged between each surrounding wall 220, so as to form three layers annular channel. Each annular channel all has thermal current channel 210 which communicates with main wind channel 211. In present embodiment, each partition board is formed by collector lens 24, at the focus position of the collector lens 24, a communicative cycling heat collecting tubes 25 is provided , and the cycling heat collecting tubes 25 are arranged along annular channels, and large heat capacity fluid such as water is filled in the tube. The bottom surface of the solar pre heat room 20 is a reflector 23 which can reflect sunlight inward. Out of the solar pre-heat room 20, solar liquid heat collector 26 which generally faces to direction of sunlight is provided, for example, common solar water heater can be used to communicate with cycling heat collecting tube 25 to further heat up heat collecting medium in the cycling heat collecting tube 25. Further, the cycling heat collecting tube 25 connects with liquid cooling heat removal system of the latter said air compressor 36, such that excess heat produced when compressing the air can be fully used. Accordingly, traditional direct sunlight heating to the air in solar pre-heat room is changed to roast heating mainly through the cycling heat collecting tube 25. It greatly increases heating efficiency, and can get more higher temperature than traditional mode, as well can further stabilize fluctuation that temperature changes with environment. In order to adjust peak-notch change of generating capacity which caused by change of external environment, such as day and night, four seasons, wind power, cloudy and sunny, electric station of present invention further includes a set of adjusting peak load device 30, which further includes electric air compressor 36 connected to the said wind power generation device 40 and charging and discharging device 33, such as accumulator battery which connects to charging and discharging manager, which are all managed and controlled through a power distribution control device 31, it belongs to commonly used public known technology. The air compressor generally is provided with air cooling or liquid cooling heat radiator, and its operational principle is idiomatic technical means. According to preferred embodiment of present invention, air compressor with liquid cooling heat radiator is utilized and it is benefit to recovery utilization of waste heat.

The operational principle of present invention is as following: when environment has good condition to generate electricity, with the management of power distribution control device, excess quantity of electricity starts the air compressor 36 to charge air to the air storage tank 32. At the same time, excess electricity supplies power to charging and discharging device 33 through charging cable 42 which is connected to wind power generator. Preferably, the charging and discharging device 33 is a set of accumulator battery. When generating condition of environment is not well, the wind power generation device 40 can not get enough driving energy, through management of power distribution control device 31, the adjusting peak load device 30 makes the air storage tank 32 to supply power to over one air motors 43 which locate in air duct well 12. It helps driving the wind power generator through mechanical or electric transmission mode to operate, at the same time, air duct 39 can drive the air motor 38 to drive blower 37 with mechanical transmission mode to supply air in main wind channel 211. Optionally, the blower can drive electric motor 35 to operate with electric mode in which charging and discharging device 33 discharges through control cable 34. Furthermore, the said cycling heat collecting tube 25 can be connected to terrestrial heat pump 27 of geothermal water heating system under good condition, heat of heat collecting media is supplemented through geothermal water.

With reference to Fig.3, the wind power generation device 40 is coaxially set at central part of air duct well 12, and is fixed to inner wall of air duct well 12 through several support brackets of wind power generation device 122. The wind power generation device 40 includes a reducing duct device with a reducing portion H; a generator 401 is set in this duct device; an impeller 402 which drives the generator 401 to rotate is set at the position with the most minimum diameter of reducing portion H in the said duct device, and the impeller is connected to rotor axes of the generator 401; the rotor axes passes through the generator 401, out end of the rotor axes is connected to a pressure turbine 403, and relative to the said impeller 402, the rotor axes locates in the intake direction of the said duct device. Inlet of the duct device, i.e., inlet aperture 408 and outlet aperture 407 of the duct device are same, and its outer wall 406 appears cylinder shaped.

Preferably, inner contour line of longitudinal section of reducing portion H of the said duct device is a symmetrical hyperbola.

The wind power generation device 40 is as far as possible coaxially set at central part of the air duct well 12, and the cross-sectional area of the said wind power generation device is less than or equal to 50% that of the air duct well, such that disturbance to surrounding airflow is relatively small, and benefit to velocity and pressure restoration of acting airflow, so as to ensure generation device of next level efficiently operate.

With reference to Fig.3-5, combined structure of the impeller 402, generator 401, and pressure turbine 403 is overall fixed on duct wall through several support brackets of the generator, and is received within outer contour line of the said duct device, i.e, between inlet 408 and outlet 407 of duct device, which can maximum reduce disturbance to surrounding airflow.

Efficient acting rotational speed of impeller 402 is relatively low to working rotational speed of generator 401, the impeller is connected to the rotor axes of the generator 401 through a transmission 404 which is used to increase speed, so as to make the generator 401 to get relatively high rotational speed.

Efficient acting rotational speed of pressure turbine 403 is commonly same with or higher than working rotational speed of the generator 401, as well, the pressure turbine is provided with transmission which is used to adjust rotational speed of the pressure turbine between rotor axes.

Preferably, the generator 401 is a frequency conversion permanent-magnetic generator, which structure is relatively simple, so as to be easily maintained and easily adapt condition that power input is not stable.

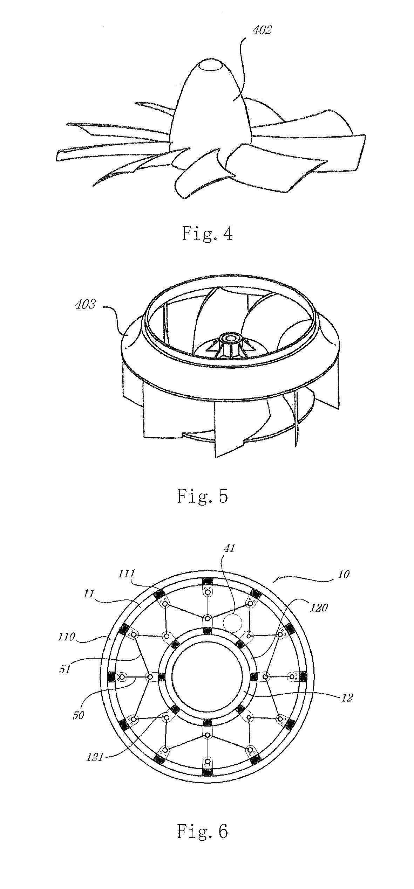

With reference to Fig.6, the air duct well 12 locates within bearing structure 11 and is coaxial with the bearing structure 11.Several groups of air duct well support rings 120 which surround outer wall of the air duct well 12 are set from top to bottom, eight air duct well connect points 121 are uniformly distributed along top circumference on each group of air duct well support ring 120.Wall of bearing structure 11 is provided with several groups of bearing structure support ring 110 at position of corresponding said air duct well support ring 120, as well twelve bearing structure connect points 111 are uniformly distributed along top circumference on the said bearing structure support ring 110. The air duct well connect point 121 is connected to the bearing structure connect point 111 with equal height through a support bar, one end of the support bar is connected to the air duct well connect point 121 and another end is connected to bearing structure connect point 111 on the side wall of the bearing structure 11, each support bar symmetrically distributes in the plane. Wherein four uniformly distributed air duct well connect points 121 and corresponding four bearing structure connect points 111 form a cross shape through four straight support bars which distribute along radial direction, and the said bearing structure connect points connect to air duct well connect points through oblique support bar 51 and form a symmetrical structure with octagon shape.

In wind tower structure of air duct well electric station utilizing integrated energy, the bearing structure 11 is steel truss structure or steel concrete structure. The air duct well 12 is steel concrete structure. Preferably, the said air duct well is splicing structure with pre-sectional steel concrete tube.

Further, the bearing structure utilizing the steel truss structure is wrapped with light composite board. Besides increasing aesthetics, it also can reduce influence of crosswind to the air duct well 12. Preferably, the said light composite board is colorful steel-polyurethane foam composite board.

In order to increase strength of structure, all or one of each support ring and support bar are preferably formed by flange beam.

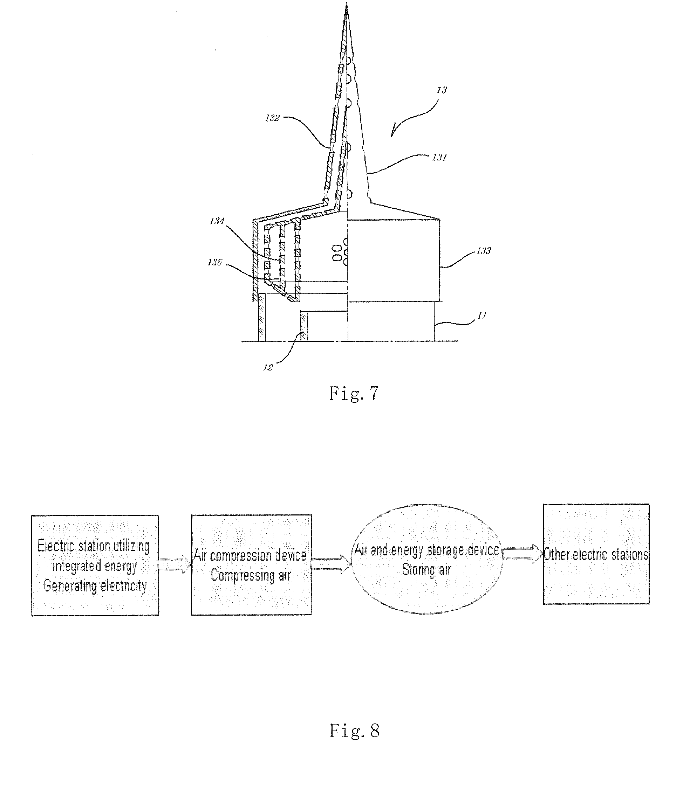

With reference to Fig.7, the said muffler 13 is provided with an end cap 133 which is set on top of the wind tower 10, the muffler 13 is provided with some dispersed exhaust holes 132.

The muffler 13 includes several groups of interval and coaxial cylindrical hush pipes 134. Preferably, the muffler 13 is formed by telescoping three cylinder structure of different diameters with an interval between each other. Several horizontal exhaust holes 135 are set on each hush pipe 134, and the end caps 133 cover the outermost of the said hush pipes 134 with interval. The under opening of the hush pipe 134 communicates with upper end of the air duct well 12.

Horizontal exhaust holes 135 set on adjacent hush pipes 134 are staggered with each other, that is to say, the hole center of each exhaust hole 135 does not align with each other. Preferably, three layers hush pipe 134 is provided.

The muffler 13 is provided with a hollow tapered end 131, several exhaust holes 132 are set on taper surface of the tapered end 131.

Total area of exhaust holes 135 on hush pipe of each layer is more than or equal to cross-sectional area of outlet of the air duct well 12.

The said exhaust holes 135 can be circular holes or groove joints structure. The groove joints of each layer are staggered with each other, so as to avoid airflow directly passing through adjacent hush pipes 134.

Generally, the top end of the tapered end 131 is provided with lightning protection device or warning and signal device according to requirement.

With reference to Fig.8, a storage energy generation system utilizing integrated energy is disclosed, this storage energy generation system particularly includes electric station utilizing integrated energy, which is connected to air compression device used to produce compressed air as energy storage media, and the air compression device is connected to air storage device used to store compressed air, then the said air storage device further is connected to other electric station, such that it can stably generates electricity as main or auxiliary driving power or adjust peak load of electric station to meet requirement of electric grid.

Preferably, the said integrated energy includes one of natural energy such as fossil fuel, wind power, hydraulic power, solar energy, tidal energy, wave energy or combination thereof.

For environmental protection, the present invention preferably provides air duct well electric station utilizing integrated energy of wind power and solar energy, particularly the said air duct well electric station utilizing integrated energy of present invention as storage energy electric station utilizing compressed air.

Particularly, the air compression device in air duct well electric station utilizing integrated energy can be set independently or compressed air system which is included in adjusting peak load system 30 in the air duct well electric station utilizing integrated energy as shown in Fig.1. The two modes both can get same technical effect.

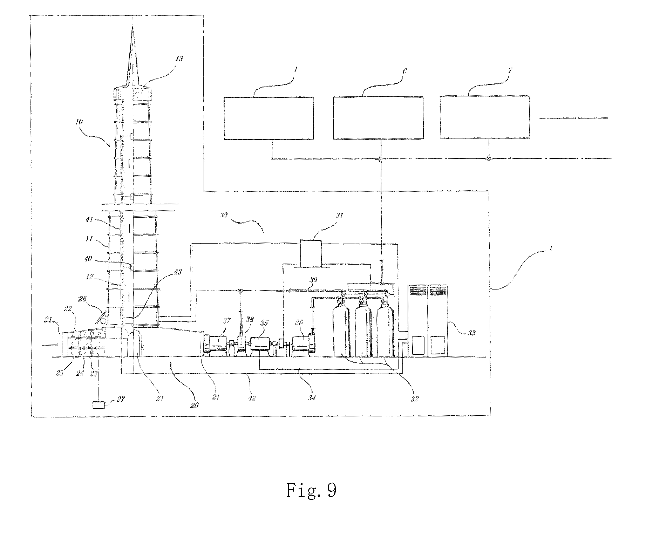

With reference to Fig.9, a preferable embodiment provides an adjusting peak load device 30 which combines with the said air duct well electric station utilizing integrated energy, and the output end of air storage tank 32 of the adjusting peak load device 30 also supplies compressed air to other wind power generating device. As public known technology, the output end of air storage tank 32 generally is provided with electric current and voltage regulation device. It does not belong to technical solution protected by present invention and is not described in detail.

The air storage tank 32 is connected to other wind power generating device, including additional one or all of air duct well electric station utilizing integrated energy 1, pressure turbo-generator 6 and paddle typed wind power generator 7. And the air storage tank supplies compressed air to these generating devices as driving or complementary energy.

The air storage tank is connected to a pressure motor 38 of another air duct well electric station utilizing integrated energy 1, and the pressure motor 38 is connected to a blower 37, and the blower 37 is set at air inlet 21 of the said air duct well electric station utilizing integrated energy 1.

According to aforementioned, the air duct well electric station utilizing integrated energy 1 has air motor 43 which is set in the air duct well 12, the output end of the said air storage tank 32 is further connected to input end of the air motor 43. Through mechanical or electric transmission mode, the air motor 43 is connected to wind power generator 40 of the air duct well electric station utilizing integrated energy 1.

The air storage tank 32 also can supply driving airflow to pressure turbo-generator 6, and the input end of the pressure turbo-generator 6 is connected to output end of the air storage tank 32.

The air storage tank 32 also can supply driving airflow to paddle typed wind power generator 7. The paddle typed wind power generator 7 is provided with air turbine driving device which linked with driving shaft (not shown in Figure). Input end of the air turbine driving device is connected to output end of the said air storage tank 32. Principle and structure of air turbine driving device belong to public known technology, and there are many optional specific technical solutions, and the content does not belong to protection of present invention and is not necessary to be described in details.

In order to get most optimal pneumatic efficiency, the air storage tank 32 is over one steel air storage tank which can resist pressure of 120-180 atmosphere pressure.

According to this, generation method for storage energy electric system utilizing integrated energy, which utilizes air duct well electric station utilizing integrated energy 1 to generate electricity and drive air compressor 36, further produce compressed air with pressure of 120-180 atmosphere pressure and store compressed air in the air storage tank 32 as energy storage medium, then stably supply compressed air to over one wind power generating device as driving or complementary energy.

It is not hard for those skilled in art that the present invention includes any combination of any part in this description.

The present invention detailedly describes structure and operational principle of air duct well electric station utilizing integrated energy, and the deemed preferable embodiments of the air duct well electric station utilizing integrated energy as storage energy electric station, and it particularly benefits to protection of environment. But according to principle of present invention, it is not excluded that utilizing other integrated energy electric station as storage energy electric station, and utilizing energy storage medium to other electric station as main or auxiliary driving energy. These electric stations include one of natural energy such as fossil fuel, hydraulic power, tidal energy, wave energy or combination thereof, the generating principle is not content protected by present invention and is not necessary to be described in details.

## Claims

1. A Storage energy generation method utilizing natural energy, which includes steps of utilizing natural energy to generate electricity, **characterized in that** utilizes natural energy electric station to generate electricity and drive air compressed device, and further utilizes the air compressed device to produce compressed air as energy storage medium, then store compressed air in air storage device, and then compressed air is deemed as main driving energy or auxiliary driving energy of other electric stations.

2. Generation method according to claim 1, the said natural energy electric station is a wind power electric station.

3. Generation method according to claim 2, the said natural energy electric station is an air duct well electric station utilizing integrated energy.

4. Generation method according to claim 2, **characterized in that** the said air duct well electric station utilizing natural energy generates electricity through its wind power generator to drive an air compressor; the compressed air is stored in air storage tank, and the said air storage tank is connected to others over one electric station, and supplies compressed air to the electric station as main driving power or power for adjusting peak load compensation.

5. Generation method according to claim 1, **characterized in that** the said natural energy electric station is a hydraulic electric station.

6. Generation method according to claim 1, **characterized in that** the said natural energy electric station is a wave energy electric station.

7. Generation method according to claim 1, **characterized in that** the said natural energy electric station is a tidal energy electric station.

8. Generation method according to claim 1, **characterized in that** the said compressed air has pressure of 120-180 atmosphere pressure.

9. A Storage energy generation system utilizing natural energy, which includes a storage energy electric station utilizing natural energy, **characterized in that** the said storage energy electric station utilizing natural energy is provided with air compressed device to produce compressed air as energy storage medium, the air compressed device is connected to air storage device which used to store compressed air, and the said air storage device is further connected to other electric stations to supply energy for stably generating electricity or adjusting peak load compensation.

10. The storage energy generation system utilizing natural energy according to claim 9, **characterized in that** the said storage energy generation system utilizing natural energy is an air duct well electric station utilizing integrated energy (1).

11. The storage energy generation system utilizing natural energy according to claim 10, **characterized in that** the said air duct well electric station utilizing integrated energy (1) includes wind power generator (40) set within it, the wind power generator (40) being connected to air compressed device, and the air compressed device is connected to air storage device used to store compressed air, and the air storage device is further connected to other electric stations.

12. The storage energy generation system utilizing natural energy according to claim 11, **characterized in that** the said other electric stations are air duct well electric station utilizing integrated energy (1).

13. The storage energy generation system utilizing natural energy according to claim 12, **characterized in that** the said air duct well electric station utilizing integrated energy (1) is provided with air motor (43) which is set in air duct well (12), the output end of the said air storage device is connected to the input end of the air motor (43).

14. The storage energy generation system utilizing natural energy according to claim 13, **characterized in that** the said air motor (43) is connected to air motor (40) of the said air duct well electric station utilizing integrated energy (1) through mechanical or electric transmission device.

15. The storage energy generation system utilizing natural energy according to claim 19, **characterized in that** the said others electric station is electric station utilizing pressure turbo-generator (6), the input end of the pressure turbo-generator (6) is connected to the output end of the said air storage device.

16. The storage energy generation system utilizing natural energy according to claim 9, **characterized in that** the said others electric station is electric station utilizing paddle typed wind power generator (7).

17. The storage energy generation system utilizing natural energy according to claim 16, **characterized in that** the said paddle typed wind power generator (7) is provided with air turbine driving device linked with driving shaft, the input end of the air turbine driving device is connected to the output end of the said air storage device.

18. The storage energy generation system utilizing natural energy according to claim 9, **characterized in that** the said storage energy electric station utilizing natural energy is a hydraulic electric station.

19. The storage energy generation system utilizing natural energy according to claim 9, **characterized in that** the said storage energy electric station utilizing natural energy is a wave energy electric station.

20. The storage energy generation system utilizing natural energy according to claim 9, **characterized in that** the said storage energy electric station utilizing natural energy is a tidal energy electric station.

21. The storage energy generation system utilizing natural energy according to any one of claims 9-20, **characterized in that** the said air storage device is over one N groups of steel ferroconcrete air storage tank which can resist pressure of 120-180 atmosphere pressure and current civil pressure standard air bottle which is a carbon fiber wrapped bottle with aluminum alloy liner, epoxy resin adhesive and resists pressure of 42Mpa.

22. An air duct well electric station utilizing integrated energy, including an air duct well which is perpendicular to the ground and on base of which some intake channels are set, a solar pre-heat room with a bottom surface of which is flush with the bottom surface of the air duct well and top surface of which is higher than the said intake channels surrounds the said base, one or more wind power generators with airflow driving device are set in the said air duct well, **characterized in that** the said solar pre-heat room is provided with a heat collector and an optical collector which gathers sunlight to the heat collector; an adjusting peak load device, which includes an electric air compressor, a charging and discharging device and a power distribution control device which are connected to the said wind power generator, the air compressor are connected to a group of air storage tanks through pipeline; air inlets corresponding to the said intake channels are set around the said solar pre-heat room, the air inlets communicates with the said intake channels through a main wind channel.
